(19) **Europäisches Patentamt**
**European Patent Office**
**Office européen des brevets**

(11) **EP 4 586 507 A1**

(12) **EUROPEAN PATENT APPLICATION**
published in accordance with Art. 153(4) EPC

(43) Date of publication:
**16.07.2025 Bulletin 2025/29**

(21) Application number: **23870964.6**

(22) Date of filing: **27.09.2023**

(51) International Patent Classification (IPC):
**H04B 1/713** (2011.01)

(52) Cooperative Patent Classification (CPC):
**H04B 1/713; H04L 5/00; H04W 74/0833**

(86) International application number:
**PCT/CN2023/122199**

(87) International publication number:
**WO 2024/067737 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 CN 202211230928**

(71) Applicant: **Huawei Technologies Co., Ltd.
Shenzhen, Guangdong 518129 (CN)**

(72) Inventors:
• **HAN, Chengcheng**
  **Shenzhen, Guangdong 518129 (CN)**
• **GUO, Zhiheng**
  **Shenzhen, Guangdong 518129 (CN)**
• **LONG, Yi**
  **Shenzhen, Guangdong 518129 (CN)**
• **XIE, Xinqian**
  **Shenzhen, Guangdong 518129 (CN)**

(74) Representative: **Thun, Clemens
Mitscherlich PartmbB
Patent- und Rechtsanwälte
Karlstraße 7
80333 München (DE)**

(54) **METHOD FOR COMMUNICATION, DEVICE, STORAGE MEDIUM, AND PROGRAM PRODUCT**

(57) Embodiments of the present disclosure provide a communication method, a device, a storage medium, and a program product. In the method, a terminal device receives, from a network device, frequency hopping information associated with a random access preamble sequence. Further, the terminal device selects a frequency hopping manner or a non-frequency hopping manner based on the frequency hopping information, to transmit the random access preamble sequence to the network device, where the random access preamble sequence is repeatedly transmitted. In this way, the terminal device may flexibly select the frequency hopping manner or the non-frequency hopping manner based on the frequency hopping information, to transmit the random access preamble sequence. In the frequency hopping manner, a diversity gain can be obtained, to improve reliability of receiving the random access preamble sequence. In the non-frequency hopping manner, spectrum discontinuity can be avoided, complexity of a radio scheduling resource can be reduced, and compatibility with an existing terminal device can be maintained.

500

Receive, from a network device, frequency hopping information associated with a random access preamble sequence — 510

Select a frequency hopping manner or a non-frequency hopping manner based on the frequency hopping information, to transmit the random access preamble sequence to the network device — 520

FIG. 5

EP 4 586 507 A1

## Description

**TECHNICAL** FIELD

The present disclosure generally relates to the telecommunication field, and more specifically, to a communication method, a terminal device, a network device, a computer-readable storage medium, and a computer program product.

BACKGROUND

In a wireless communication scenario such as millimeter wave communication, a terminal device needs to obtain uplink synchronization through a random access procedure, and access a network to perform communication.

For example, in a contention-based random access procedure, a random access preamble sequence may be transmitted in a frequency hopping manner. However, a frequency hopping random access preamble sequence may cause spectrum discontinuity and high complexity of radio resource scheduling by a base station. Therefore, there is a need to resolve problems of spectrum discontinuity and high complexity of radio resource scheduling. It may be understood that similar problems may also exist in a frequency band other than a millimeter wave band or in a contention-free random access procedure.

**SUMMARY**

This application provides a technical solution for improving transmitting of a random access preamble sequence. The technical solution can improve flexibility of transmitting a random access preamble sequence.

According to a first aspect, a communication method is provided. The method may be performed by a terminal device or a chip used in a terminal device. The following provides descriptions by using an example in which the method is performed by a terminal device. In the method, the terminal device receives, from a network device, frequency hopping information associated with a random access preamble sequence. In addition, the terminal device selects a frequency hopping manner or a non-frequency hopping manner based on the frequency hopping information, to transmit the random access preamble sequence to the network device, where the random access preamble sequence is repeatedly transmitted. **In** the foregoing manner, the terminal device may flexibly select the frequency hopping manner or the non-frequency hopping manner based on the frequency hopping information, to transmit the random access preamble sequence. **In** the frequency hopping manner, a diversity gain can be obtained, to improve reliability of receiving the random access preamble sequence. **In** the non-frequency hopping manner, spectrum discontinuity can be avoided, complexity of a radio scheduling resource can be reduced, and compatibility with an existing terminal device can be maintained.

**In** some implementations, the frequency hopping information includes a frequency hopping gain. **In** this way, the network device may directly transmit the frequency hopping gain to the terminal device. This is convenient for the terminal device to subsequently calculate a transmitting power of frequency hopping, and determine whether to roll back a quantity of repeated transmissions and whether to use the frequency hopping manner or the non-frequency hopping manner, thereby simplifying implementation of the terminal device.

**In** some implementations, the selecting a frequency hopping manner or a non-frequency hopping manner includes: determining an initial quantity of repeated transmissions of the random access preamble sequence; determining the quantity of repeated transmissions based on the frequency hopping information; and determining the frequency hopping manner when the quantity of repeated transmissions is less than the initial quantity of repeated transmissions; or determining the non-frequency hopping manner when the quantity of repeated transmissions is equal to the initial quantity of repeated transmissions. **In** this way, the terminal device selects the frequency hopping manner when the quantity of repeated transmissions is less than the initial quantity of repeated transmissions, so that fewer time resources can be occupied, and spectrum discontinuity can be reduced. The terminal device selects the non-frequency hopping manner when the quantity of repeated transmissions is equal to the initial quantity of repeated transmissions, so that spectrum discontinuity can be avoided, and complexity of radio resource scheduling can be reduced.

**In** some implementations, that the terminal device determines an initial quantity of repeated transmissions of the random access preamble sequence includes: determining the initial quantity of repeated transmissions of the random access preamble sequence by the terminal device based on a reference signal received power and a reference signal received power threshold. In this way, the initial quantity of repeated transmissions is calculated, and it is convenient to calculate an actual quantity of repeated transmissions, which facilitates selection between the frequency hopping manner and the non-frequency hopping manner.

**In** some implementations, that the terminal device determines the quantity of repeated transmissions based on the frequency hopping information includes: determining a logarithm of a decrement of the initial quantity of repeated transmissions, and a sum of a reference signal received power and the frequency hopping gain; and when the sum is greater than or equal to a reference signal received power threshold, determining the decrement of the initial quantity of repeated transmissions as the quantity of repeated transmissions; or when the sum is less than a reference signal received power threshold, determining the initial quantity of repeated transmissions as the quantity of repeated transmissions. **In** this way, the sum is compared with the reference signal received power **RSRP** threshold, so that the terminal device can determine an appropriate quantity of repeated transmissions. When the sum is greater than or equal to the **RSRP** threshold, the decrement of the initial quantity of repeated transmissions is determined as the quantity of repeated transmissions, and the frequency hopping manner is selected, so that occupied time resources are reduced while enough diversity gains are obtained, and spectrum discontinuity is reduced while reliability of receiving the random access preamble sequence is ensured. When the sum is less than the **RSRP** threshold, the initial quantity of repeated transmissions is determined as the quantity of repeated transmissions, and the non-frequency hopping manner is selected, so that fewer spectrum resources are occupied, spectrum discontinuity is avoided, and complexity of radio resource scheduling is reduced.

**In** some implementations, when random access in the non-frequency hopping manner fails, the communication method of the terminal includes at least one of the following: transmitting the random access preamble sequence in the frequency hopping manner; and transmitting the random access preamble sequence according to an increased quantity of repeated transmissions. In this way, the diversity gain can be increased, thereby improving reliability of receiving the random access preamble sequence.

In some implementations, the frequency hopping information includes frequency hopping pattern information. The frequency hopping pattern information indicates a distribution pattern of frequency hopping resources for transmitting the random access preamble sequence. In this way, the network device may directly indicate the terminal device to perform frequency hopping by using a specific frequency hopping pattern. This facilitates coordinating a time domain resource and a frequency domain resource between a plurality of terminal devices, reducing interference, and improving reliability of receiving the random access preamble sequence.

**In** some implementations, the distribution pattern includes: frequency hopping arrangement of the frequency hopping resources along a time increasing direction in an ascending frequency order or a descending frequency order. **In** this way, unidirectional frequency hopping is performed in the ascending frequency order or the descending frequency order, so that implementation complexity is reduced while the diversity gain is obtained.

**In** some implementations, the frequency hopping pattern information includes at least one of the following: a frequency offset, indicating an offset in frequency domain between adjacent resource blocks in a same frequency hopping period; a resource block granularity, indicating a size of a resource block for frequency hopping; and a quantity of frequency hops per period, indicating a quantity of frequency hopping resource blocks measured at the resource block granularity in a same frequency hopping period. In this way, unidirectional frequency hopping is accurately and flexibly controlled by using a parameter. This facilitates coordinating a time domain resource and a frequency domain resource between a plurality of terminal devices, reducing interference, and improving reliability of receiving the random access preamble sequence.

**In** some implementations, the distribution pattern includes: frequency hopping arrangement, of the frequency hopping resources along a time increasing direction, alternating between an ascending frequency order and a descending frequency order. **In** this way, a frequency interval in time-frequency domain between temporally adjacent resource blocks may be as short as possible, and spectrum resource discontinuity is minimized while the diversity gain is obtained.

**In** some implementations, the frequency hopping pattern information includes at least one of the following: a frequency offset, indicating an offset in frequency domain between adjacent resource blocks in a same frequency hopping period; a resource block granularity, indicating a size of a resource block for frequency hopping; and a quantity of one-direction frequency hops, indicating a quantity of frequency hops in a one-direction frequency hopping process performed in an ascending frequency order or a descending frequency order. **In** this way, bidirectional frequency hopping is accurately and flexibly controlled by using a parameter. This facilitates coordinating a time domain resource and a frequency domain resource between a plurality of terminal devices, reducing interference, and improving reliability of receiving the random access preamble sequence.

**In** some implementations, the frequency hopping manner includes: transmitting the random access preamble sequence based on a combination of the frequency hopping manner and the non-frequency hopping manner. **In** this way, spectrum resource fragmentation is reduced while the diversity gain is obtained, complexity of network device scheduling is reduced, and spectrum utilization efficiency is improved. **In** some implementations, the frequency hopping information includes information about a ratio between the frequency hopping resources and a non-frequency hopping resource. **In** this way, a proportion of resources for frequency hopping can be accurately controlled, and the diversity gain can be accurately controlled. **In** some implementations, the frequency hopping information includes time domain position information of the frequency hopping resources. **In** this way, transmitting time of a frequency hopping part of the preamble sequence can be accurately controlled, mutual interference between preamble sequences of different terminals is reduced, and spectrum resource fragmentation is reduced in a simple manner while the diversity gain is obtained.

According to a second aspect, a communication method is provided. The method may be performed by a network device or a chip used in a network device. The following provides descriptions by using an example in which the method is performed by a network device. **In** the method, the network device determines frequency hopping information associated with a random access preamble sequence. The frequency hopping information indicates a terminal device to select a frequency hopping manner or a non-frequency hopping manner, to transmit the random access preamble sequence to the network device. In addition, the network device transmits the frequency hopping information to the terminal device. In the foregoing manner, the network device may indicate the terminal device to flexibly select the frequency hopping manner or the non-frequency hopping manner based on the frequency hopping information, to transmit the random access preamble sequence. In the frequency hopping manner, a diversity gain can be obtained, to improve reliability of receiving the random access preamble sequence. In the non-frequency hopping manner, spectrum discontinuity can be avoided, complexity of a radio scheduling resource can be reduced, and compatibility with an existing terminal device can be maintained.

In some implementations, the frequency hopping information includes a frequency hopping gain. **In** this way, the network device may directly transmit the frequency hopping gain to the terminal device. This is convenient for the terminal device to subsequently calculate a transmitting power of frequency hopping, and determine whether to roll back a quantity of repeated transmissions and whether to use the frequency hopping manner or the non-frequency hopping manner, thereby simplifying implementation of the terminal device.

In some implementations, the frequency hopping information includes frequency hopping pattern information. The frequency hopping pattern information indicates a distribution pattern of frequency hopping resources for transmitting the random access preamble sequence. **In** this way, the network device may directly indicate the terminal device to perform frequency hopping by using a specific frequency hopping pattern. This facilitates coordinating a time domain resource and a frequency domain resource between a plurality of terminal devices, reducing interference, and improving reliability of receiving the random access preamble sequence.

**In** some implementations, the distribution pattern includes: frequency hopping arrangement of the frequency hopping resources along a time increasing direction in an ascending frequency order or a descending frequency order. In this way, unidirectional frequency hopping is performed in the ascending frequency order or the descending frequency order, so that implementation complexity is reduced while the diversity gain is obtained.

In some implementations, the frequency hopping pattern information includes at least one of the following: a frequency offset, indicating an offset in frequency domain between adjacent resource blocks in a same frequency hopping period; a resource block granularity, indicating a size of a resource block for frequency hopping; and a quantity of frequency hops per period, indicating a quantity of frequency hopping resource blocks measured at the resource block granularity in a same frequency hopping period. In this way, unidirectional frequency hopping is accurately and flexibly controlled by using a parameter. This facilitates coordinating a time domain resource and a frequency domain resource between a plurality of terminal devices, reducing interference, and improving reliability of receiving the random access preamble sequence.

In some implementations, the distribution pattern includes: frequency hopping arrangement, of the frequency hopping resources along a time increasing direction, alternating between an ascending frequency order and a descending frequency order. In this way, a frequency interval between temporally adjacent time-frequency domain resource blocks may be as short as possible, and spectrum resource discontinuity is minimized while the diversity gain is obtained.

In some implementations, the frequency hopping pattern indication includes at least one of the following: a frequency offset, indicating an offset in frequency domain between adjacent resource blocks in a same frequency hopping period; a resource block granularity, indicating a size of a resource block for frequency hopping; and a quantity of one-direction frequency hops, indicating a quantity of frequency hops in a one-direction frequency hopping process performed in an ascending frequency order or a descending frequency order. In this way, bidirectional frequency hopping is accurately and flexibly controlled by using a parameter. This facilitates coordinating a time domain resource and a frequency domain resource between a plurality of terminal devices, reducing interference, and improving reliability of receiving the random access preamble sequence.

In some implementations, the frequency hopping manner includes: transmitting the random access preamble sequence based on a combination of the frequency hopping manner and the non-frequency hopping manner. In this way, spectrum resource fragmentation is reduced while the diversity gain is obtained, complexity of network device scheduling is reduced, and spectrum utilization efficiency is improved. In some implementations, the frequency hopping information includes information about a ratio between the frequency hopping resources and a non-frequency hopping resource. In this way, a proportion of resources for frequency hopping can be accurately controlled, and the diversity gain can be accurately controlled. In some implementations, the frequency hopping information includes time domain position information of the frequency hopping resources. In this way, transmitting time of a frequency hopping part of the preamble sequence can be accurately controlled, mutual interference between preamble sequences of different terminals is reduced, and spectrum resource fragmentation is reduced in a simple manner while the diversity gain is obtained.

According to a third aspect, a communication apparatus is provided. The communication apparatus may be the terminal device in the foregoing method embodiment, or may be a chip disposed in the terminal device. The communication apparatus includes a processor and a memory. The memory is configured to store a computer program or instructions. When the processor executes the computer program or the instructions, the communication apparatus is enabled to perform the method performed by the terminal device in the foregoing method embodiment.

According to a fourth aspect, a communication apparatus is provided. The communication apparatus may be the network device in the foregoing method embodiment, or may be a chip disposed in the network device. The communication apparatus includes a processor and a memory. The memory is configured to store a computer program or instructions. When the processor executes the computer program or the instructions, the communication apparatus is enabled to perform the method performed by the network device in the foregoing method embodiment.

According to a fifth aspect, this application provides a computer-readable storage medium. The computer-readable storage medium stores a computer program. When the computer program is run, the method performed by the terminal device in the foregoing aspects is implemented.

According to a sixth aspect, this application provides a computer-readable storage medium. The computer-readable storage medium stores a computer program. When the computer program is run, the method performed by the network device in the foregoing aspects is implemented.

According to a seventh aspect, a computer program product is provided. The computer program product includes computer program code. When the computer program code is run, the method performed by the terminal device in the foregoing aspects is performed.

According to an eighth aspect, a computer program product is provided. The computer program product includes computer program code. When the computer program code is run, the method performed by the network device in the foregoing aspects is performed.

**BRIEF DESCRIPTION OF DRAWINGS**

FIG. 1 shows a communication network in which embodiments of this application can be implemented;
FIG. 2A is a schematic flowchart of random access according to an embodiment of this application;
FIG. 2B is a diagram of a structure of a random access preamble sequence according to an embodiment of this application;
FIG. 2C is a diagram of frequency hopping of a random access preamble sequence according to an embodiment of this application;
FIG. 2D is a diagram of a frequency hopping pattern of a random access preamble sequence according to an embodiment of this application;
FIG. 3A is a schematic flowchart of selecting a frequency hopping manner or a non-frequency hopping manner for a random access preamble sequence according to an embodiment of this application;
FIG. 3B is a diagram of a frequency hopping pattern of a random access preamble sequence according to an embodiment of this application;
FIG. 3C is a diagram of another frequency hopping pattern of a random access preamble sequence according to an embodiment of this application;
FIG. 4A is a diagram of a combination of frequency hopping and non-frequency hopping according to an embodiment of this application;
FIG. 4B is a diagram of another combination of frequency hopping and non-frequency hopping according to an embodiment of this application;
FIG. 5 is a flowchart of a communication method implemented by a terminal device according to an embodiment of this application;
FIG. 6 is a flowchart of a communication method implemented by a network device according to an embodiment of this application;
FIG. 7 is a simplified block diagram of an example device in a possible implementation according to an embodiment of this application;
FIG. 8 is a simplified block diagram of a communication apparatus in a possible implementation according to an embodiment of this application; and
FIG. 9 is a simplified block diagram of a network device in a possible implementation according to an embodiment of this application.

**DESCRIPTION OF EMBODIMENTS**

To make the objectives, technical solutions, and advantages of this application clearer, the following further describes this application in detail with reference to the accompanying drawings. Specific operation methods, function descriptions, and the like in method embodiments may also be applied to apparatus embodiments or system embodiments.

As described above, in a wireless communication scenario such as millimeter wave communication, a terminal device needs to obtain uplink synchronization through a random access procedure, and access a network to perform communication. The random access procedure is an important method and means for a UE to switch from an idle state, in which a dedicated channel resource is obtained, to a connected state. The random access procedure is used in scenarios such as radio resource control (Radio Resource Control, RRC) establishment, RRC reestablishment, cell handover, and uplink and downlink data arrival. Random access includes contention-based random access and contention-free random access. Contention-free access is usually used when the terminal can successfully receive RRC signaling. For example, in a contention-based random access procedure, a random access preamble sequence may be transmitted in a frequency hopping manner.

Specifically, random access through frequency hopping can obtain a diversity gain at the cost of segmenting bandwidth into a plurality of parts. In NB-IoT, bandwidth segmentation may not be a major problem. However, in an uplink broadband service system such as eMBB, spectrum discontinuity and resource fragmentation are caused, which increases complexity of resource scheduling by a base station, and increases signaling overheads of resource indication. Therefore, there is a need to resolve problems of spectrum discontinuity and high complexity of radio resource scheduling. It may be understood that similar problems may also exist in a frequency band other than a millimeter wave band or in a contention-free random access procedure.

To resolve the foregoing problems, an embodiment disclosed in this application provides a communication method for a random access preamble sequence. In the method, a terminal device receives, from a network device, frequency hopping information associated with a random access preamble sequence. Further, the terminal device selects a frequency hopping manner or a non-frequency hopping manner based on the frequency hopping information, to transmit the random access preamble sequence to the network device. In the foregoing manner, the terminal device can flexibly select between the frequency hopping manner and the non-frequency hopping manner based on the frequency hopping information. In the frequency hopping manner, a frequency hopping gain can be obtained, while in the non-frequency hopping manner, spectrum resource fragmentation is not caused, which simplifies radio resource scheduling by a base station. It may be understood that the method provided in the present disclosure is also applicable to contention-free random access, another high-frequency scenario (above 6G), and another low-frequency scenario (sub 6G). Other than an OFDM system, the method may also be applicable to a wireless communication system such as code division multiple access (Code Division Multiple Access, CDMA) or time division multiple access (Time Division Multiple Access, TDMA). This is not limited in the present disclosure.

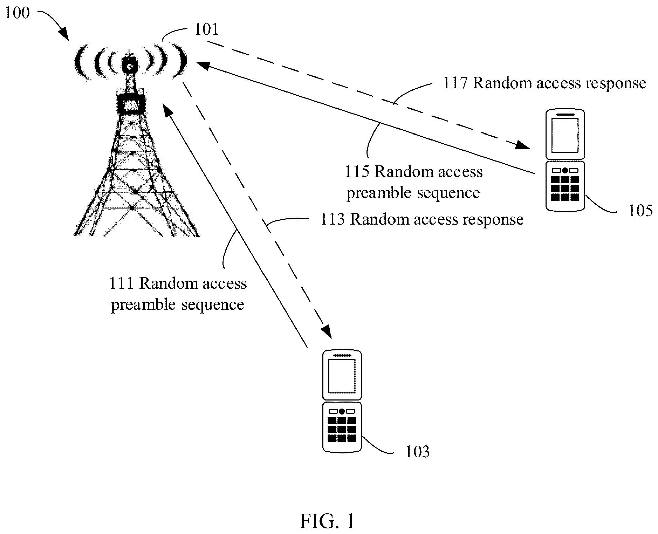

As shown in FIG. 1, the communication method provided in an embodiment of this application may be applied to a wireless communication system 100. In the wireless communication system 100, a network device 101 and terminal devices 103 and 105 are included.

In a random access procedure, the terminal devices 103 and 105 respectively transmit random access preamble sequences 111 and 115 to the network device 101, and respectively receive random access responses 113 and 117 from the network device 101.

It should be understood that the foregoing wireless communication system is applicable to a high-frequency scenario (above 6G) such as a millimeter wave, and is also applicable to a low-frequency scenario (sub 6G). An application scenario of the wireless communication system includes but is not limited to an existing communication system such as a 5th generation (5G) system or a new radio (new radio, NR) communication system, a future evolved public land mobile network (public land mobile network, PLMN) system, or the like.

The terminal devices 103 and 105 shown above may be user equipment (user equipment, UE), terminals (terminals), access terminals, terminal units, terminal stations, mobile stations (mobile stations, MSs), remote stations, remote terminals, mobile terminals (mobile terminals), wireless communication devices, terminal agents, terminal devices, or the like. The terminal device 110 may alternatively be a communication chip having a communication module, or may be a vehicle having a communication function, or a vehicle-mounted device (for example, a vehicle-mounted communication apparatus or a vehicle-mounted communication chip), or the like. The terminal devices 103 and 105 may have a wireless transceiver function. The terminal devices can perform communication (for example, wireless communication) with one or more network devices in one or more communication systems, and accept network services provided by the network devices. The network devices herein include but are not limited to the network device (101) shown in the figure.

The terminal devices 103 and 105 may be cellular phones, cordless phones, session initiation protocol (session initiation protocol, SIP) phones, wireless local loop (wireless local loop, WLL) stations, personal digital assistant (personal digital assistant, PDA) devices, handheld devices having a wireless communication function, computing devices, or other processing devices connected to a wireless modem, vehicle-mounted devices, wearable devices, terminal apparatuses in a future 5G network, terminal apparatuses in a further evolved PLMN, or the like.

The terminal devices 103 and 105 may be specifically mobile phones (mobile phones), tablet computers (pads), computers having a wireless transceiver function, virtual reality (virtual reality, VR) terminals, augmented reality (augmented reality, AR) terminals, wireless terminals in industrial control (industrial control), wireless terminals in self-driving (self-driving), wireless terminals in telemedicine (remote medical), wireless terminals in a smart grid (smart grid), wireless terminals in transportation safety (transportation safety), wireless terminals in a smart city (smart city), wireless terminals in a smart home (smart home), or the like.

In addition, the terminal devices 103 and 105 may be deployed on land, where the deployment includes indoor or outdoor, or handheld or vehicle-mounted deployment, or the terminal device 110 may be deployed on a water surface (for example, on a ship), or the terminal devices 103 and 105 may be deployed in air (for example, on aircraft, a balloon, or a satellite). The network device (101) may be an access network device (or referred to as an access network site). The access network device is a device that provides a network access function, for example, a radio access network (radio access network, RAN) base station. The network device (101) may specifically include a base station (base station, BS), or include a base station, a radio resource management device configured to control the base station, and the like. The network device (101) may alternatively include a relay station (relay device), an access point, a base station or an NR base station in a 5G network, a base station in a future evolved PLMN, or the like. The network device (101) may be a wearable device or a vehicle-mounted device. Alternatively, the network device (101) may be a communication chip having a communication module.

For example, the network device (101) includes but is not limited to a base station (gNodeB, gNB) in 5G, an evolved NodeB (evolved NodeB, eNB) in a long term evolution (long term evolution, LTE) system, a radio network controller (radio network controller, RNC), a radio controller in a cloud radio access network (cloud radio access network, CRAN) system, a base station controller (base station controller, BSC), a home base station (for example, a home evolved NodeB, or a home NodeB, HNB), a baseband unit (baseband unit, BBU), a transmitting and receiving point (transmitting and receiving point, TRP), a transmitting point (transmitting point, TP), and a mobile switching center, or may be an evolved (evolutional) NodeB (eNB or eNodeB) in LTE, or may be a base station device in a future 5G network or an access network device in a future evolved PLMN, or may be a wearable device or a vehicle-mounted device.

In some deployments, the network device may include a central unit (central unit, CU) and a distributed unit (distributed unit, DU). The network device may further include an active antenna unit (active antenna unit, AAU). The CU implements some functions of the network device, and the DU implements some functions of the network device. For example, the CU is responsible for processing a non-real-time protocol and service, and implementing functions of a radio resource control (radio resource control, RRC) layer and a packet data convergence protocol (packet data convergence protocol, PDCP) layer. The DU is responsible for processing a physical layer protocol and a real-time service, and implementing functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being transmitted by the DU or transmitted by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. Network device examples include but are not limited to a NodeB (NodeB or NB), an evolved NodeB (eNodeB or eNB), a next-generation NodeB (gNB), a transmitting and receiving point (TRP), a remote radio unit (RRU), a radio head (RH), a remote radio head (RRH), an IAB node, and a low power node, for example, a femto node, a pico node, a reconfigurable intelligent surface (RIS), and a network-controlled repeater.

In addition, the network device (101) may be connected to a core network (core network, CN) device. The core network device may be configured to provide a core network service for the access network device (101) and the terminal devices (103 and 105). The core network device may correspond to different devices in different systems. For example, in 3G, the core network device may correspond to a serving general packet radio service (general packet radio service, GPRS) support node (serving GPRS support node, SGSN) and/or a gateway GPRS support node (gateway GPRS Support Node, GGSN). In 4G, the core network device may correspond to a mobility management entity (mobility management entity, MME) and/or a serving gateway (serving gateway, S-GW). In 5G, the core network device may correspond to an access and mobility management function (access and mobility management function, AMF), a session management function (session management function, SMF), or a user plane function (user plane function, UPF).

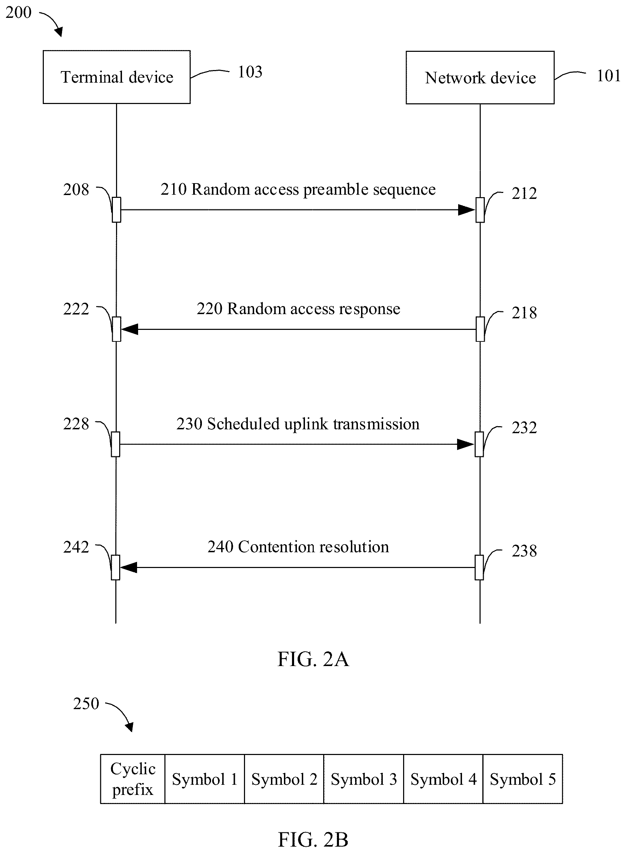

FIG. 2A is a schematic flowchart of random access according to an embodiment of this application. Specifically, a process 200 is a flowchart of contention-based random access. A network device 101 and a terminal device 103 in the flowchart are the same as the network device 101 and the terminal device 103 in FIG. 1. The contention-based random access procedure is described as follows.

The network device 101 transmits a plurality of millimeter wave beams. Each millimeter wave beam corresponds to one synchronous broadcast block (Synchronization Signal and PBCH Block, SSB). The terminal device 103 first selects a beam with maximum SSB received power from the plurality of millimeter wave beams based on a received system message sent by the network device 101, that is, selects a corresponding SSB index. The terminal device 103 randomly selects an RO from random access occasions (RACH occasions, ROs) associated with the SSB index, to transmit a random access preamble sequence, namely, Msg1. The RO may be a time-frequency resource used by the terminal device 103 for random access, and an association relationship between an RO and an SSB index is preconfigured in the network device. A maximum of 64 random access preamble sequences may be simultaneously transmitted on one RO. After determining the time-frequency resource, that is, the RO, the terminal device 103 selects one of the 64 random access preamble sequences on the selected RO, and transmits (208) a random access preamble sequence 210 to the network device 101. The random access preamble sequence 210 is carried by a physical random access channel (Physical Random Access Channel, PRACH).

After receiving (212) the random access preamble sequence 210, the network device 101 allocates, to the terminal, a time-frequency domain resource, scheduling information of scheduled uplink transmission 230, and the like in a random access response 220. The random access response (Random access response, RAR) is also referred to as Msg2, and the scheduled uplink transmission 230 is also referred to as Msg3. A RAR includes the scheduling information of the Msg3, that is, RAR UL grant information. The network device 101 transmits (218) the random access response 220 to the terminal device 103.

After receiving (222) the random access response 220, the terminal device 103 transmits (228), to the network device 101, the scheduled uplink transmission 230 through a time-frequency resource specified in the random access response 220. The random access response 220 is carried by a physical uplink shared channel (Physical Uplink Shared Channel, PUSCH).

After receiving (232) the scheduled uplink transmission 230, the network device 101 transmits (238) contention resolution 240. The contention resolution 240 is also referred to as Msg4. When a plurality of terminals simultaneously perform random access, the Msg4 may be used to determine a terminal for access during the random access. The terminal device 103 receives (242) the contention resolution 240, and confirms the access, or backs off for specific time, and then performs random access again.

In a contention-free random access procedure (not shown in FIG. 2A), the network device 101 transmits a random access indication to the terminal device 103. The random access indication is also referred to as Msg0. The terminal device 103 transmits the random access preamble sequence 210 to the network device 101 based on the random access indication, and the network device 101 transmits the random access response 220 to the terminal device 103, to complete the contention-free random access procedure.

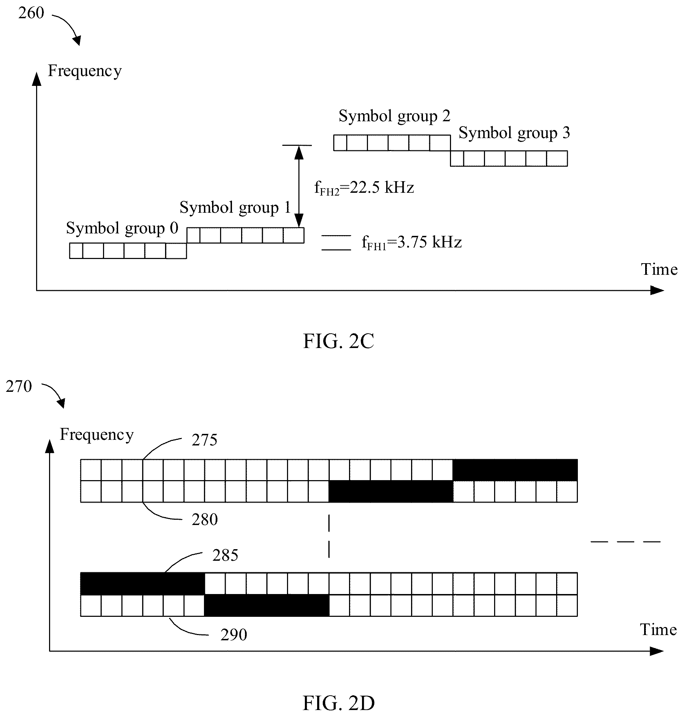

In this embodiment of the present disclosure, a narrowband internet of things (Narrowband Internet of Things, NB-IoT) uses a narrowband random access channel (Narrowband Physical Random Access Channel, NPRACH) to complete random access. For example, random access may use a subcarrier spacing of 3.75 kHz to transmit random access preamble sequences with different cyclic prefixes in a single-subcarrier frequency hopping symbol group manner. Each random access preamble sequence includes four symbol groups. Each symbol group includes five symbols, such as orthogonal frequency division multiplexing (Orthogonal Frequency Division Multiplexing, OFDM) symbols, and one cyclic prefix (Cyclic Prefix, CP), as shown in FIG. 2B. In the symbol group of the random access preamble sequence, the CP is added only in front of the five symbols, instead of adding the CP in front of each OFDM symbol. The random access preamble sequence does not use a multi-carrier modulation manner, orthogonality between subcarriers may not be maintained by using the CP, and saved CP resources may carry more preamble sequence information. The random access preamble sequence may include two formats, and the two formats have different cyclic prefix lengths. The four symbol groups are transmitted in a frequency hopping manner. As shown in FIG. 2C, a frequency hopping interval between a symbol group 2 and a symbol group 1 is 3.75 kHz, a frequency hopping interval between a symbol group 3 and the symbol group 2 is 22.5 kHz, and a frequency hopping interval between a symbol group 4 and the symbol group 3 is -3.75 kHz. It may be understood that other than NB-IoT, random access through frequency hopping may be further used in scenarios such as enhanced mobile broadband (Enhanced Mobile Broadband, eMBB) and ultra-reliable and low latency communication (Ultra-reliable and Low Latency Communication, URLLC). A subcarrier spacing may be another value such as 7.5 kHz or 15 kHz. Each symbol group may include another quantity of symbols such as three or four. This is not limited in the present disclosure.

In this embodiment of the present disclosure, the terminal device 103 may calculate a frequency domain position of a symbol group 0 in the four symbol groups of the random access preamble sequence according to the following formula. c(n) is a pseudo-random sequence related to a physical cell identifier (Physical Cell Identifier, PCI).

$$f(-1) = 0$$

$$f(t) = \left( f(t-1) + \left( \sum_{n=10t+1}^{10t+9} c(n) 2^{n-(10t+1)} \right) mod(N_{sc}^{RA} - 1) + 1 \right) mod N_{sc}^{RA}$$

In this embodiment of the present disclosure, the terminal device 103 may calculate frequency domain offsets of the symbol group 1 to the symbol group 3 relative to the symbol group 0 based on the frequency domain position of the symbol group 0 by using the following formula:

$$\tilde{n}_{sc}^{RA}(i)$$

$$= \begin{cases} (\tilde{n}_{sc}^{RA}(0) + f(t)) mod N_{sc}^{RA} & imod4 = 0 \ \ and \ \ i > 0 \ \ and \ \ t = \dfrac{i}{4} \\ \tilde{n}_{sc}^{RA}(i-1) + 1 & imod4 = 1,3 \ \ and \ \ \ \tilde{n}_{sc}^{RA}(i-1) mod2 = 0 \\ \tilde{n}_{sc}^{RA}(i-1) - 1 & imod4 = 1,3 \ \ and \ \ \ \tilde{n}_{sc}^{RA}(i-1) mod2 = 1 \\ \tilde{n}_{sc}^{RA}(i-1) + 6 & imod4 = 2 \ \ and \ \ \ \tilde{n}_{sc}^{RA}(i-1) < 6 \\ \tilde{n}_{sc}^{RA}(i-1) - 6 & imod4 = 2 \ \ and \ \ \ \tilde{n}_{sc}^{RA}(i-1) \geq 6 \end{cases}$$

In this embodiment of the present disclosure, four different frequency hopping patterns are shown in FIG. 2D. In a frequency hopping pattern 270, a horizontal axis represents time, a vertical axis represents frequency, and there are four random access preamble sequences 275, 280, 285, 290 with different gray levels. Frequency hopping is respectively performed, in different frequency hopping patterns, for the symbol groups in the random access preamble sequences 275, 280, 285, and 290. One symbol group occupies only one subcarrier. In the frequency hopping pattern, a bandwidth range is 180 kHz, and the subcarrier spacing is 3.75 kHz. It may be understood that in the frequency hopping pattern, the bandwidth range may be another value, and the subcarrier spacing is another value such as 7.5 kHz, 15 kHz, or 30 kHz. This is not limited in the present disclosure.

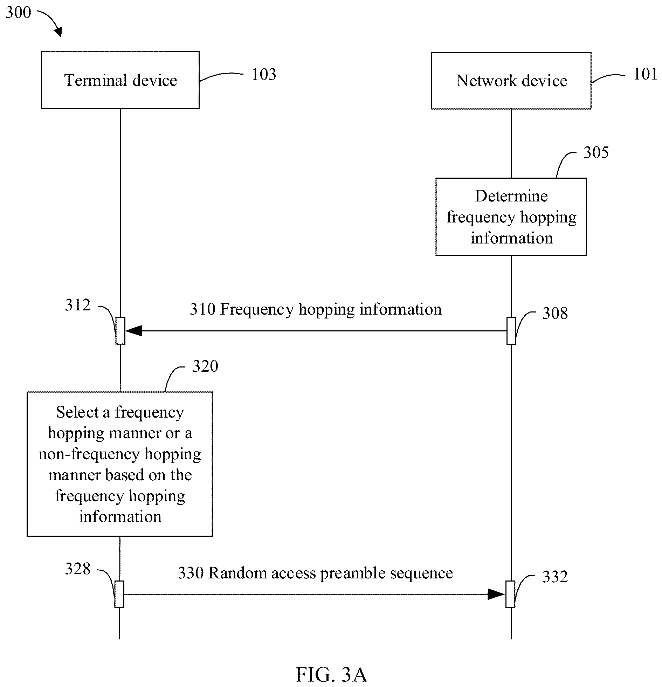

FIG. 3A is a schematic flowchart of selecting a frequency hopping manner or a non-frequency hopping manner for a random access preamble sequence according to an embodiment of this application.

In a process 300, a network device 101 determines (305) frequency hopping information associated with the random access preamble sequence. The frequency hopping information indicates a terminal device 103 to select the frequency hopping manner or the non-frequency hopping manner, to transmit the random access preamble sequence to the network device 101. The network device 101 transmits (308), to the terminal device 103, frequency hopping information 310 associated with the random access preamble sequence. After receiving (312) the frequency hopping information 310, the terminal device 103 selects (320) the frequency hopping manner or the non-frequency hopping manner based on the frequency hopping information 310, and transmits (328) a random access preamble sequence 330 to the network device 101.

In this embodiment of the present disclosure, further, the network device 101 may transmit (308) the frequency hopping information such as a frequency hopping gain FH-gain, and may further transmit an SSB signal and PRACH indication information. The frequency hopping gain may be a frequency diversity gain obtained because frequency hopping is performed for the random access preamble sequence. The PRACH indication information may indicate a time-frequency domain transmitting position and a quantity of repeated transmissions of the random access preamble sequence. The PRACH indication information may further include a reference signal received power (Reference Signal Received Power, RSRP) threshold, corresponding to the quantity of repeated transmissions, for repeated transmissions.

The terminal device 103 may first measure an RSRP of the SSB signal, and select an SSB beam with a highest RSRP. The terminal device 103 further receives the PRACH indication information, and obtains a time-frequency domain resource position of a PRACH and the RSRP threshold for repeated transmissions. The terminal device 103 determines an initial quantity of repeated transmissions and the quantity of repeated transmissions based on a received RSRP and the RSRP threshold for repeated transmissions. If the quantity of repeated transmissions is less than the initial quantity of repeated transmissions, the random access preamble sequence is transmitted in the frequency hopping manner. If the quantity of repeated transmissions is equal to the initial quantity of repeated transmissions, the random access preamble sequence is transmitted in the non-frequency hopping manner. In both the frequency hopping manner and the non-frequency hopping manner, the random access preamble sequence is repeatedly transmitted.

Specifically, the terminal device 103 may receive SIB1 signaling and a downlink reference signal SSB that are transmitted by the network device 101, to obtain the RSRP of each beam, where a SIB is a system information block (System Information Block). The terminal device 103 selects, for example, the SSB beam with the highest RSRP based on the RSRP of each beam, and obtains a corresponding SSB index. The time-frequency domain position of the PRACH and the initial quantity of repeated transmissions are determined based on the PRACH indication information. Specifically, the terminal device 103 first selects the SSB beam with the highest RSRP, determines, based on an index of the selected SSB, the time-frequency resource position of the PRACH of the selected SSB beam, and compares the measured RSRP with the RSRP threshold, to determine the initial quantity of repeated transmissions of the random access preamble sequence. Both the measured RSRP and the RSRP threshold may be represented in a logarithmic manner such as dB and dBm.

The terminal device 103 calculates a logarithm of a decrement of the initial quantity of repeated transmissions of the access preamble sequence, and a sum of the measured RSRP and the frequency hopping gain FH-gain. The decrement of the initial quantity of repeated transmissions may be calculated in the following manner: If the initial quantity of repeated transmissions is 8, the decrement of the initial quantity of repeated transmissions may be 4. If the initial quantity of repeated transmissions is 4, the decrement of the initial quantity of repeated transmissions may be 2. It may be understood that the decrement of the initial quantity of repeated transmissions may alternatively be another quantity of times. This is not limited in the present disclosure. If the sum is greater than or equal to the RSRP threshold, the decrement of the initial quantity of repeated transmissions is used as the quantity of repeated transmissions, and the random access preamble sequence is transmitted in the frequency hopping manner. If the sum is less than the RSRP threshold, the initial quantity of repeated transmissions is used as the quantity of repeated transmissions, and the random access preamble sequence is transmitted in the non-frequency hopping manner. It may be understood that if the measured RSRP and the RSRP threshold are represented in a linear manner, the decrement of the initial quantity of repeated transmissions of the access preamble sequence, and a product value of the measured RSRP and the frequency hopping gain FH-gain may be calculated, and the product value is compared with the RSRP threshold.

Frequency hopping may bring a diversity gain, for example, a frequency diversity gain, thereby improving reliability of receiving the random access preamble sequence. If the sum is greater than or equal to the RSRP threshold, the decrement of the initial quantity of repeated transmissions is used as the quantity of repeated transmissions, and the random access preamble sequence can be reliably received as long as the frequency hopping manner is used. Therefore, the random access preamble sequence is transmitted by using a small quantity of repeated transmissions and in the frequency hopping manner. This reduces the quantity of repeated transmissions, saves transmitting time and a transmitting power of the random access preamble sequence, and saves PRACH resources. However, if the sum is less than the RSRP threshold, the initial quantity of repeated transmissions is used as the quantity of repeated transmissions, and the random access preamble sequence is transmitted in the non-frequency hopping manner. This avoids frequency domain resource fragmentation caused by frequency hopping, and can still obtain a time diversity gain through repeated transmissions, thereby implementing reliable receiving of the random access preamble sequence. The manner of repeatedly transmitting the random access preamble sequence further implements good compatibility with an existing terminal device.

In this embodiment of the present disclosure, when failing to perform random access in the non-frequency hopping manner, the terminal device 103 may transmit the random access preamble sequence in the frequency hopping manner. In this way, the frequency diversity gain may be obtained in the frequency hopping manner, thereby improving reliability of receiving the random access preamble sequence. Alternatively, the terminal device 103 may further increase the quantity of repeated transmissions to transmit the random access preamble sequence, which increases the time diversity gain and a total transmitting power, thereby improving reliability of receiving the random access preamble sequence. In embodiments of the present disclosure, the frequency hopping manner and the manner of increasing the quantity of repeated transmissions may be used at the same time.

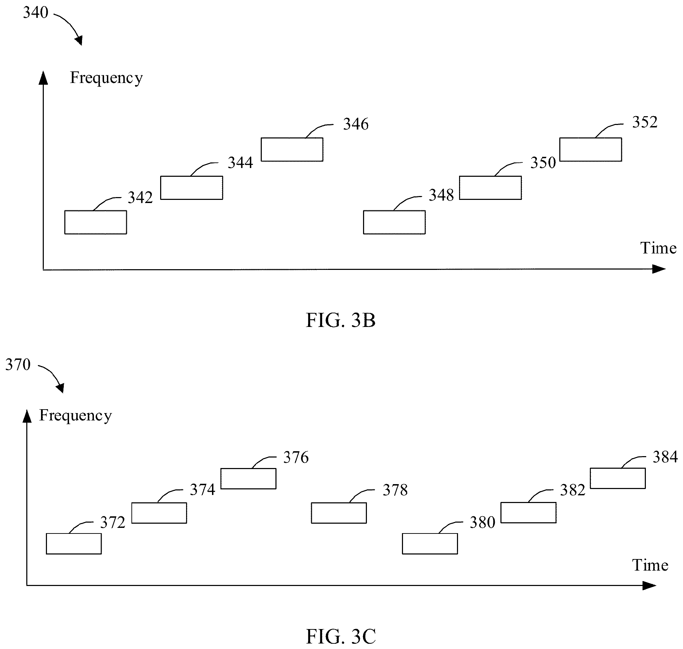

In embodiments of the present disclosure, the frequency hopping information further includes frequency hopping pattern information. The frequency hopping pattern information indicates a distribution pattern of frequency hopping resources for transmitting the random access preamble sequence. FIG. 3B is a diagram of the frequency hopping pattern of the random access preamble sequence according to an embodiment of this application. As shown in FIG. 3B, in a frequency hopping pattern 340, preamble sequence resource blocks 342, 344, and 346 form a frequency hopping period. In addition, frequency hopping is performed along a time increasing direction in an ascending frequency manner. Preamble sequence resource blocks 348, 350, and 352 form a frequency hopping period, and frequency hopping is also performed in the frequency ascending manner. In a unidirectional frequency hopping manner, frequency hopping can be implemented in a simple manner to obtain the diversity gain. A frequency interval between adjacent preamble sequence resource blocks may be greater than coherence bandwidth of a channel, thereby as much as possible ensuring that channel environments of the adjacent preamble sequence resource blocks for frequency hopping are independent, and obtaining a higher diversity gain. In this embodiment of the present disclosure, frequency hopping may also be performed, along the time increasing direction, for the adjacent preamble sequence resource blocks in the frequency hopping period in a descending frequency manner.

In this embodiment of the present disclosure, for example, frequency hopping pattern information in frequency hopping pattern indication signaling may include: a frequency offset FH-Offset, indicating an offset in frequency domain between adjacent preamble sequence resource blocks in a same frequency hopping period; a resource block granularity FH-granularity, indicating a size of a preamble sequence resource block for frequency hopping, for example, a quantity of ROs in a time domain and a frequency domain; and a quantity of frequency hops per period FH-Num, indicating a quantity of frequency hopping resource blocks measured at the resource block granularity in a same frequency hopping period. In this manner, a specific time-frequency domain resource position occupied by the preamble sequence when frequency hopping is performed, along the time increasing direction, for the preamble sequence in the ascending frequency order or the descending frequency order may be determined, to implement the frequency hopping pattern of the preamble sequence, obtain the diversity gain, and improve reliability of receiving the preamble sequence.

It may be understood that the frequency hopping pattern indication signaling may be represented in another manner, for example, using other names for "frequency offset", "quantity of frequency hops per period", and "resource block granularity", and using other English names for "FH-Offset", "FH-Num", and "FH-granularity". This is not limited in the present disclosure.

FIG. 3C is a diagram of another frequency hopping pattern of the random access preamble sequence according to an embodiment of this application. As shown in FIG. 3C, a frequency hopping pattern 370 includes preamble sequence resource blocks 372, 374, 376, 378, 380, 382, and 384. The preamble sequence resource blocks 372, 374, 376, and 378 form a frequency hopping period. In addition, frequency hopping is performed along a time increasing direction in a manner in which an ascending frequency order follows a descending frequency order. Frequency hopping is performed in the manner in which an ascending frequency order follows a descending frequency order, which reduces a frequency interval between temporally adjacent preamble sequence resource blocks, may reduce spectrum resource fragmentation, and reduces complexity of resource scheduling. A frequency interval between adjacent preamble sequence resource blocks may be greater than coherence bandwidth of a channel, thereby as much as possible ensuring that channel environments of the adjacent preamble sequence resource blocks for frequency hopping are independent, and obtaining a higher diversity gain. In this embodiment of the present disclosure, frequency hopping may also be performed, along the time increasing direction, for the adjacent preamble sequence resource blocks in the frequency hopping period in a manner in which a descending frequency order follows an ascending frequency order. In conclusion, frequency hopping may be performed, along the time increasing direction, on the adjacent preamble sequence resource blocks in the frequency hopping period in a manner in which an ascending frequency order alternates with a descending frequency order.

In this embodiment of the present disclosure, for example, frequency hopping pattern information in frequency hopping pattern indication signaling may include: a frequency offset FH-Offset, indicating an offset in frequency domain between adjacent preamble sequence resource blocks in a same frequency hopping period; a resource block granularity FH-granularity, indicating a size of a preamble sequence resource block for frequency hopping; and a quantity of one-direction frequency hops per period FH-Num-Onedirection, indicating a quantity of frequency hops in a one-direction frequency hopping process performed in an ascending frequency order or a descending frequency order. In this manner, a specific time-frequency domain resource position occupied by the preamble sequence when frequency hopping is performed, along the time increasing direction, for the preamble sequence in the ascending frequency order or the descending frequency order may be determined, to implement the frequency hopping pattern of the preamble sequence, obtain the diversity gain, and improve reliability of receiving the preamble sequence.

It may be understood that the frequency hopping pattern indication signaling may be represented in another manner, for example, using other names for "frequency offset", "quantity of one-direction frequency hops", and "resource block granularity", and using other English names for "FH-Offset", "FH-Num-Onedirection", and "FH-granularity". This is not limited in the present disclosure.

In this embodiment of the present disclosure, the random access preamble sequence may be transmitted in a manner of combining frequency hopping and non-frequency hopping, so that spectrum resource fragmentation is reduced while the diversity gain is obtained, complexity of network device scheduling is reduced, and spectrum utilization efficiency is improved.

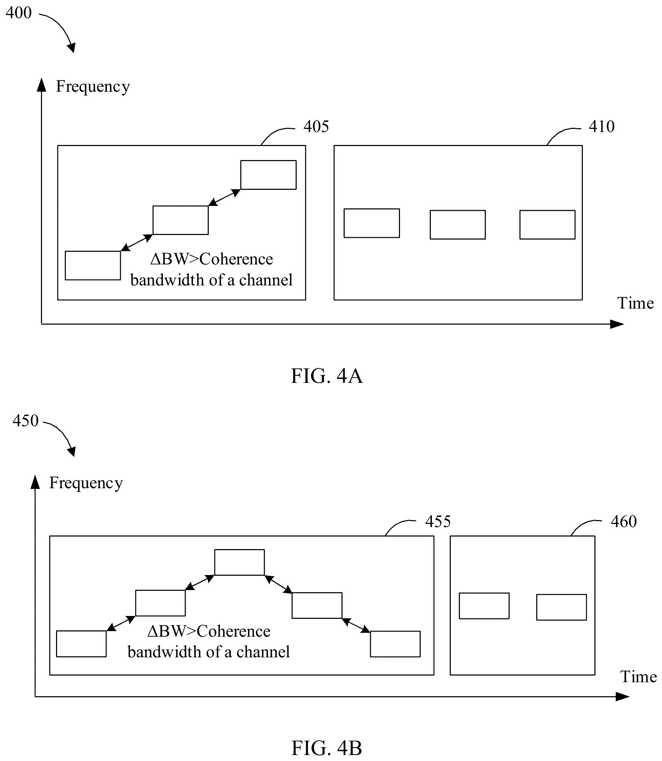

FIG. 4A is a diagram of a combination of frequency hopping and non-frequency hopping according to an embodiment of this application. In a pattern 400, the frequency hopping manner is used in a first part 405 of a transmitting period of the preamble sequence. However, a non-frequency hopping repeated transmitting manner is used in a second part 410 of the transmitting period of the preamble sequence. Specifically, a frequency hopping manner in a unidirectional ascending frequency order is used in the first part 405 of the transmitting period of the preamble sequence. As described above, a frequency hopping manner in a unidirectional descending frequency order may alternatively be used in the first part 405 of the transmitting period of the preamble sequence. As shown in FIG. 4A, the transmitting period of the preamble sequence may include only one frequency hopping first part 405 and one non-frequency hopping second part 410; may alternatively include a plurality of frequency hopping first parts 405 and a plurality of non-frequency hopping second parts 410, which alternate with each other; or may include a plurality of frequency hopping first parts 405 and one or more non-frequency hopping parts 410. In the foregoing manner, the combination of frequency hopping and non-frequency hopping can be flexibly implemented, and spectrum resource fragmentation is reduced while a diversity gain is obtained. In this embodiment of the present disclosure, an interval $\Delta BW$ between temporally adjacent frequency hopping resources may be greater than coherence bandwidth of a channel, to obtain as many frequency diversity gains as possible in a frequency hopping process.

Correspondingly, the frequency hopping information may include information about a ratio between the frequency hopping resources and a non-frequency hopping resource. In this way, a proportion of resources for frequency hopping is accurately controlled, the diversity gain is accurately controlled, and spectrum resource fragmentation is reduced while the diversity gain is obtained. The frequency hopping information may further include time domain position information of the frequency hopping resources. In this way, transmitting time of a frequency hopping part of the preamble sequence can be accurately controlled, mutual interference between preamble sequences of different terminals is reduced, and spectrum resource fragmentation is reduced in a simple manner while the diversity gain is obtained.

The information about the ratio between the frequency hopping resources and a non-frequency hopping resource may be represented by FH-resource. The time domain position information of the frequency hopping resources may also be represented by FH-resource. It may be understood that the time domain position information of the frequency hopping resources and the information about the ratio between the frequency hopping resources and a non-frequency hopping resource may also be represented in another manner. This is not limited in the present disclosure.

FIG. 4B is a diagram of another combination of frequency hopping and non-frequency hopping according to an embodiment of this application. In a pattern 450, the frequency hopping manner is used in a first part 455 of a transmitting period of the preamble sequence. However, a non-frequency hopping repeated transmitting manner is used in a second part 460 of the transmitting period of the preamble sequence. Specifically, a frequency hopping manner in which an ascending frequency order follows a descending frequency order is used in the first part 455 of the transmitting period of the preamble sequence. As described above, a frequency hopping manner in which a descending frequency order follows an ascending frequency order may alternatively be used in the first part 455 of the transmitting period of the preamble sequence. As shown in FIG. 4B, the transmitting period of the preamble sequence may include only one frequency hopping first part 455 and one non-frequency hopping second part 460; may alternatively include a plurality of frequency hopping first parts 455 and a plurality of non-frequency hopping second parts 460, which alternate with each other; or may include a plurality of frequency hopping first parts 455 and one or more non-frequency hopping parts 460. In the foregoing manner, the combination of frequency hopping and non-frequency hopping can be flexibly implemented, and an interval between adjacent frequency hopping resources is reduced so that spectrum resource fragmentation is further reduced while the diversity gain is obtained. Transmitting of the non-frequency hopping part further implements good compatibility with an existing terminal device. In this embodiment of the present disclosure, an interval ΔBW between temporally adjacent frequency hopping resources may be greater than coherence bandwidth of a channel, to obtain as many frequency diversity gains as possible in a frequency hopping process.

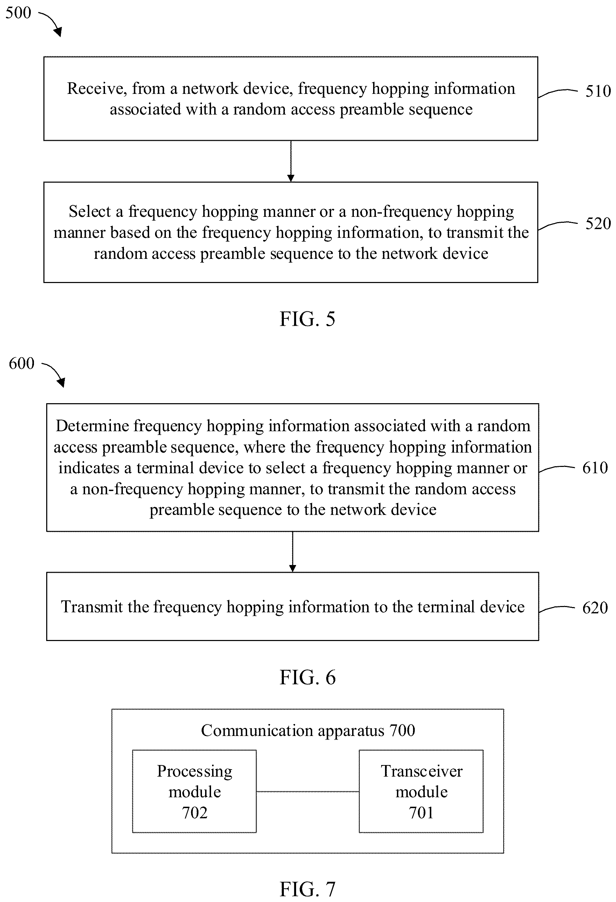

FIG. 5 is a flowchart of a communication method 500 implemented by a terminal device according to an embodiment of the present disclosure. In a possible implementation, the method 500 may be implemented by the terminal devices 103 and 105 in the example environment 100. In another possible implementation, the method 500 may further be implemented by another electronic apparatus independent of the example environment 100. For example, the following describes the method 500 by using an example in which the terminal device 103 in the example environment 100 implements the method 500.

In step 510, the terminal device 103 receives, from the network device 101, frequency hopping information associated with a random access preamble sequence. In step 520, the terminal device 103 selects a frequency hopping manner or a non-frequency hopping manner based on the frequency hopping information, to transmit the random access preamble sequence to the network device 101. The random access preamble sequence is repeatedly transmitted.

In some embodiments, the frequency hopping information includes a frequency hopping gain. In some embodiments, that the terminal device 103 selects a frequency hopping manner or a non-frequency hopping manner includes: determining, by the terminal device 103, an initial quantity of repeated transmissions of the random access preamble sequence; determining a quantity of repeated transmissions based on the frequency hopping information; and selecting the frequency hopping manner when the quantity of repeated transmissions is less than the initial quantity of repeated transmissions; or selecting the non-frequency hopping manner when the quantity of repeated transmissions is equal to the initial quantity of repeated transmissions.

In some embodiments, the determining, by the terminal device 103, an initial quantity of repeated transmissions of the random access preamble sequence includes: determining, by the terminal device 103, the initial quantity of repeated transmissions of the random access preamble sequence based on a reference signal received power and a reference signal received power threshold. In some embodiments, the determining, by the terminal device 103, a quantity of repeated transmissions based on the frequency hopping information includes: determining, by the terminal device 103, a logarithm of a decrement of the initial quantity of repeated transmissions, and a sum of a reference signal received power and the frequency hopping gain; and when the sum is greater than or equal to a reference signal received power threshold, determining the decrement of the initial quantity of repeated transmissions as the quantity of repeated transmissions; or when the sum is less than a reference signal received power threshold, determining the initial quantity of repeated transmissions as the quantity of repeated transmissions.

In some embodiments, the communication method used by the terminal device 103 further includes: when random access in the non-frequency hopping manner fails, performing at least one of the following: transmitting the random access preamble sequence in the frequency hopping manner; and transmitting the random access preamble sequence according to an increased quantity of repeated transmissions.

In some embodiments, the frequency hopping information includes frequency hopping pattern information. The frequency hopping pattern information indicates a distribution pattern of frequency hopping resources for transmitting the random access preamble sequence. In some embodiments, the distribution pattern includes: frequency hopping arrangement of the frequency hopping resources along a time increasing direction in an ascending frequency order or a descending frequency order. In some embodiments, the frequency hopping pattern information includes at least one of the following: a frequency offset, indicating an offset in frequency domain between adjacent resource blocks in a same frequency hopping period; a resource block granularity, indicating a size of a resource block for frequency hopping; and a quantity of frequency hops per period, indicating a quantity of frequency hopping resource blocks measured at the resource block granularity in a same frequency hopping period. **In** some embodiments, the distribution pattern includes: frequency hopping arrangement, of the frequency hopping resources along a time increasing direction, alternating between an ascending frequency order and a descending frequency order. **In** some embodiments, the frequency hopping pattern information includes at least one of the following: a frequency offset, indicating an offset in frequency domain between adjacent resource blocks in a same frequency hopping period; a resource block granularity, indicating a size of a resource block for frequency hopping; and a quantity of one-direction frequency hops, indicating a quantity of frequency hops in a one-direction frequency hopping process performed in an ascending frequency order or a descending frequency order.

**In** some embodiments, the frequency hopping manner includes: transmitting the random access preamble sequence based on a combination of the frequency hopping manner and the non-frequency hopping manner. In some embodiments, the frequency hopping information includes information about a ratio between the frequency hopping resources and a non-frequency hopping resource. In some embodiments, the frequency hopping information includes time domain position information of the frequency hopping resources.

FIG. 6 is a flowchart of a communication method 600 implemented by a network device according to an embodiment of the present disclosure. In a possible implementation, the method 600 may be implemented by the network device 101 in the example environment 100. In another possible implementation, the method 600 may further be implemented by another electronic apparatus independent of the example environment 100. For example, the following describes the method 600 by using an example in which the network device 101 in the example environment 100 implements the method 600.

**In** step 610, the network device 101 determines frequency hopping information associated with a random access preamble sequence. The frequency hopping information indicates the terminal device 103 to select a frequency hopping manner or a non-frequency hopping manner, to transmit the random access preamble sequence to the network device 101. In step 620, the network device 101 transmits the frequency hopping information to the terminal device 103.

In some embodiments, the frequency hopping information includes a frequency hopping gain. In some embodiments, the frequency hopping information includes frequency hopping pattern information. The frequency hopping pattern information indicates a distribution pattern of frequency hopping resources for transmitting the random access preamble sequence. In some embodiments, the distribution pattern includes: frequency hopping arrangement of the frequency hopping resources along a time increasing direction in an ascending frequency order or a descending frequency order. In some embodiments, the frequency hopping pattern information includes at least one of the following: a frequency offset, indicating an offset in frequency domain between adjacent resource blocks in a same frequency hopping period; a resource block granularity, indicating a size of a resource block for frequency hopping; and a quantity of frequency hops per period, indicating a quantity of frequency hopping resource blocks measured at the resource block granularity in a same frequency hopping period. **In** some embodiments, the distribution pattern includes: frequency hopping arrangement, of the frequency hopping resources along a time increasing direction, alternating between an ascending frequency order and a descending frequency order. **In** some implementations, the frequency hopping pattern indication includes at least one of the following: a frequency offset, indicating an offset in frequency domain between adjacent resource blocks in a same frequency hopping period; a resource block granularity, indicating a size of a resource block for frequency hopping; and a quantity of one-direction frequency hops, indicating a quantity of frequency hops in a one-direction frequency hopping process performed in an ascending frequency order or a descending frequency order.

**In** some embodiments, the frequency hopping manner includes: transmitting the random access preamble sequence based on a combination of the frequency hopping manner and the non-frequency hopping manner. **In** some embodiments, the frequency hopping information includes information about a ratio between the frequency hopping resources and a non-frequency hopping resource. **In** some embodiments, the frequency hopping information includes time domain position information of the frequency hopping resources.

**In** embodiments provided in this application, the method provided in embodiments of this application is described from perspectives of the network device, the terminal device, and interaction between the network device and the terminal device. To implement functions in the method provided in embodiments of this application, the network device and the terminal device may include a hardware structure and/or a software module, and implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

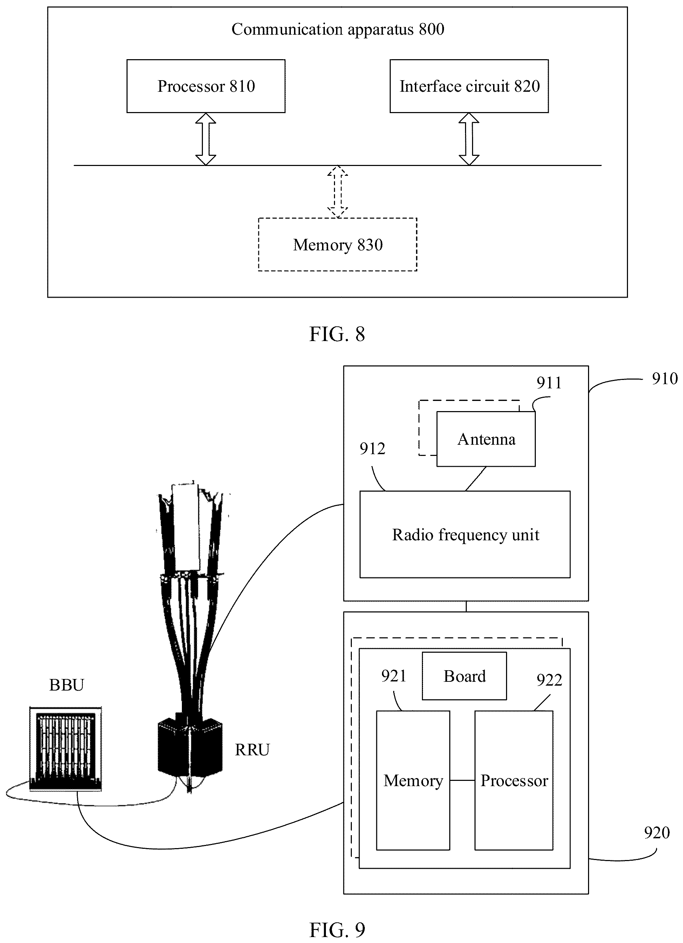

FIG. 7 and FIG. 8 are diagrams of structures of possible communication apparatuses according to embodiments of this application. The communication apparatuses may implement the functions of the terminal device or the network device in the foregoing method embodiments. Therefore, beneficial effect of the foregoing method embodiments can also be implemented. In embodiments of this application, the communication apparatus may be the terminal devices 103 and 105 shown in FIG. 1, the network device 101 shown in FIG. 1, or a module (for example, a chip) used in a terminal device or a network device.

As shown in FIG. 7, the communication apparatus 700 includes a transceiver module 701 and a processing module 702. The communication apparatus 700 may be configured to implement the functions of the terminal device or the network device in the method embodiment shown in FIG. 3A.

When the communication apparatus 700 is configured to implement the functions of the terminal device in the method embodiment shown in FIG. 3A, the transceiver module 701 is configured to receive, from the network device, frequency hopping information associated with a random access preamble sequence. The processing module 702 is configured to select a frequency hopping manner or a non-frequency hopping manner based on the frequency hopping information, to transmit the random access preamble sequence to the network device.

When the communication apparatus 700 is configured to implement the functions of the network device in the method embodiment shown in FIG. 3A, the processing module 702 is configured to determine frequency hopping information associated with a random access preamble sequence. The frequency hopping information indicates the terminal device to select a frequency hopping manner or a non-frequency hopping manner, to transmit the random access preamble sequence to the network device. The transceiver module 701 is configured to transmit the frequency hopping information to the terminal device.

For more detailed descriptions of the transceiver module 701 and the processing module 702, refer to related descriptions in the foregoing method embodiments. Details are not described herein again.

As shown in FIG. 8, the communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to store instructions executed by the processor 810, or store input data required by the processor 810 to run instructions, or store data generated after the processor 810 runs instructions.

When the communication apparatus 800 is configured to implement a method in the foregoing method embodiments, the processor 810 is configured to perform a function of the foregoing processing module 702, and the interface circuit 820 is configured to perform a function of the foregoing transceiver module 701.

When the communication apparatus is a chip used in a terminal device, the chip in the terminal device implements a function of the terminal device in the foregoing method embodiments. The chip in the terminal device receives information from another module (for example, a radio frequency module or an antenna) in the terminal device, where the information is transmitted by a network device to the terminal device. Alternatively, the chip in the terminal device transmits information to another module (for example, a radio frequency module or an antenna) in the terminal device, where the information is transmitted by the terminal device to a network device.

When the communication apparatus is a chip used in a network device, the chip in the network device implements the function of the network device in the foregoing method embodiments. The chip in the network device receives information from another module (for example, a radio frequency module or an antenna) in the network device, where the information is transmitted by a terminal device to the network device. Alternatively, the chip in the network device transmits information to another module (for example, a radio frequency module or an antenna) in the network device, where the information is transmitted by the network device to a terminal device.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor or the like.

When the apparatus in embodiments of this application is a network device, the apparatus may be shown in FIG. 9. The apparatus may include one or more radio frequency units, such as a remote radio unit (remote radio unit, RRU) 910 and one or more baseband units (baseband unit, BBU) (which may also be referred to as a digital unit (digital unit, DU)) 920. The RRU 910 may be referred to as a transceiver module. The transceiver module may include a sending module and a receiving module, or the transceiver module may be one module that can implement sending and receiving functions. The transceiver module may correspond to the transceiver module 701 shown in FIG. 7, that is, may perform an action performed by the transceiver module 701. Optionally, the transceiver module may also be referred to as a transceiver machine, a transceiver circuit, a transceiver, or the like, and may include at least one antenna 911 and a radio frequency unit 912. The RRU 910 is mainly configured to: receive and send radio frequency signals, and perform conversion between a radio frequency signal and a baseband signal. The BBU 910 is mainly configured to: perform baseband processing; control a base station; and the like. The RRU 910 and the BBU 920 may be physically disposed together, or may be physically disposed separately, namely, a distributed base station.

The BBU 920 is a control center of the base station, may also be referred to as a processing module, may correspond to the processing module 702 shown in FIG. 7, and is mainly configured to complete a baseband processing function, such as channel coding, multiplexing, modulation, and spectrum spreading. In addition, the processing module may perform an action performed by the processing module 702. For example, the BBU (processing module) may be configured to control the base station to perform an operation procedure related to the network device in the foregoing method embodiments.

In an example, the BBU 920 may include one or more boards, and a plurality of boards may jointly support a radio access network (for example, an LTE network) of a single access standard, or may separately support radio access networks (for example, an LTE network, a 5G network, or another network) of different access standards. The BBU 820 further includes a memory 821 and a processor 822. The memory 821 is configured to store instructions and data that are necessary. The processor 822 is configured to control the base station to perform a necessary action, for example, configured to control the base station to perform an operation procedure related to the network device in the foregoing method embodiments. The memory 921 and the processor 922 may serve one or more boards. In other words, a memory and a processor may be separately disposed on each board. Alternatively, a plurality of boards may share a same memory and a same processor. In addition, a necessary circuit may further be disposed on each board.

An embodiment of this application provides a communication system. The communication system may include the terminal device in the embodiment shown in FIG. 3A, and include the network device in the embodiment shown in FIG. 3A. Optionally, the terminal device and the network device in the communication system may perform the communication method shown in FIG. 3A.

An embodiment of this application further provides a circuit. The circuit may be coupled to the memory, and may be configured to perform a procedure related to the terminal device or the network device in any one of the foregoing method embodiments. The chip system may include the chip, and may further include another component such as a memory or a transceiver.

It should be understood that the processor mentioned in embodiments of this application may be a CPU, or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be understood that sequence numbers of the foregoing processes do not mean execution sequences in various embodiments of this application. The execution sequences of the processes should be determined based on functions and internal logic of the processes, and should not constitute any limitation on the implementation processes of embodiments of this application.

In combination with the examples described in embodiments disclosed in this specification, modules and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood that, for the purpose of convenient and brief description, for a detailed working process of the foregoing system, apparatus, and module, refer to a corresponding process in the foregoing method embodiments, and details are not described herein again.

In the several embodiments provided in this application, it should be understood that the disclosed communication method and apparatus may be implemented in other manners. For example, the described apparatus embodiment is merely an example. For example, the module division is merely logical function division and may be other division during actual implementation. For example, a plurality of modules or components may be combined or integrated into another system, or some features may be ignored or not performed. **In** addition, the displayed or discussed mutual couplings or direct couplings or communication connections may be implemented by using some interfaces. The indirect couplings or communication connections between the apparatuses or units may be implemented in electronic, mechanical, or other forms.

The modules described as separate components may or may not be physically separate, and components displayed as modules may or may not be physical modules, that is, may be located in one place or may be distributed on a plurality of network units. Some or all of the units may be selected according to actual requirements to achieve the objectives of the solutions of embodiments.

**In** addition, functional modules in embodiments of this application may be integrated into one processing module, or each of the modules may exist alone physically, or two or more modules are integrated into one module.

When the functions are implemented in the form of a software functional module and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing computer-readable storage medium may be any available medium that can be accessed by a computer. The following provides an example but does not impose a limitation: The computer-readable medium may include a random access memory (random access memory, RAM), a read-only memory (read-only memory, ROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, or another optical disc storage or a disk storage medium, or another magnetic storage device, or any other medium that can carry or store expected program code in a form of an instruction or a data structure and can be accessed by a computer.

As used in this specification, the term "include" and similar terms should be understood as open inclusion, that is, "include but not limited to". The term "based on" should be understood as "at least partially based on". The term "one embodiment" or "this embodiment" should be understood as "at least one embodiment". Terms such as "first", "second", and the like may represent different objects or a same object, and are merely used to distinguish between specified objects, but do not imply a specific spatial order, a time order, an importance order, or the like of the specified objects. In some embodiments, a value, a process, a selected item, a determined item, a device, an apparatus, a means, a part, a component, or the like is referred to as "optimal", "lowest", "highest", "minimum", "maximum", or the like. It should be understood that such a description is intended to indicate that a selection may be made among many available functional selections, and that such a selection does not need to be better, lower, higher, smaller, larger, or otherwise preferred than other selections in other aspects or in all aspects. As used in this specification, the term "determining" may cover a variety of actions. For example, "determining" may include operating, calculation, processing, export, investigation, lookup (for example, lookup in a table, database, or another data structure), finding, and the like. In addition, "determining" may include receiving (for example, receiving information), accessing (for example, accessing data in a memory), and the like. In addition, "determining" may include parsing, selection, choice, establishment, and the like.

The foregoing descriptions are merely specific implementations of this application, and are not intended to limit the protection scope of embodiments of this application. Any variation or replacement that a person skilled in the art can easily figure out within the technical scope disclosed in embodiments of this application shall fall within the protection scope of embodiments of this application. Therefore, the protection scope of embodiments of this application should be subject to the protection scope of the claims.

**Claims**

1. A communication method, comprising:

   receiving, by a terminal device from a network device, frequency hopping information associated with a random access preamble sequence; and
   selecting, by the terminal device, a frequency hopping manner or a non-frequency hopping manner based on the frequency hopping information, to transmit the random access preamble sequence to the network device, wherein
   the random access preamble sequence is repeatedly transmitted.

2. The method according to claim **1,** wherein the frequency hopping information comprises a frequency hopping gain.

3. The method according to claim 1 or 2, wherein the selecting a frequency hopping manner or a non-frequency hopping manner comprises:

   determining an initial quantity of repeated transmissions of the random access preamble sequence;
   determining a quantity of repeated transmissions based on the frequency hopping information; and
   selecting the frequency hopping manner when the quantity of repeated transmissions is less than the initial quantity of repeated transmissions; or
   selecting the non-frequency hopping manner when the quantity of repeated transmissions is equal to the initial quantity of repeated transmissions.

4. The method according to claim 3, wherein the determining an initial quantity of repeated transmissions of the random access preamble sequence comprises:
   determining the initial quantity of repeated transmissions of the random access preamble sequence based on a reference signal received power and a reference signal received power threshold.

5. The method according to claim 3, wherein the determining a quantity of repeated transmissions based on the frequency hopping information comprises:

   determining a logarithm of a decrement of the initial quantity of repeated transmissions, and a sum of the reference signal received power and the frequency hopping gain; and
   when the sum is greater than or equal to a reference signal received power threshold, determining the decrement of the initial quantity of repeated transmissions as the quantity of repeated transmissions; or
   when the sum is less than the reference signal received power threshold, determining the initial quantity of repeated transmissions as the quantity of repeated transmissions.

6. The method according to claim 3, further comprising:
   when random access in the non-frequency hopping manner fails, performing at least one of the following:

   transmitting the random access preamble sequence in the frequency hopping manner; and
   transmitting the random access preamble sequence according to an increased quantity of repeated transmissions.

7. The method according to claim 1, wherein the frequency hopping information comprises frequency hopping pattern information, and the frequency hopping pattern information indicates a distribution pattern of frequency hopping resources for transmitting the random access preamble sequence.

8. The method according to claim 7, wherein the distribution pattern comprises:
   frequency hopping arrangement of the frequency hopping resources along a time increasing direction in an ascending frequency order or a descending frequency order.

9. The method according to claim 8, wherein the frequency hopping pattern information comprises at least one of the following:

   a frequency offset, indicating an offset in frequency domain between adjacent resource blocks in a same frequency hopping period;
   a resource block granularity, indicating a size of a resource block for frequency hopping; and
   a quantity of frequency hops per period, indicating a quantity of frequency hopping resource blocks measured at the resource block granularity in a same frequency hopping period.

10. The method according to claim 7, wherein the distribution pattern comprises:
    frequency hopping arrangement, of the frequency hopping resources along a time increasing direction, alternating between an ascending frequency order and a descending frequency order.

11. The method according to claim 10, wherein the frequency hopping pattern information comprises at least one of the following:

a frequency offset, indicating an offset in frequency domain between adjacent resource blocks in a same frequency hopping period;

a resource block granularity, indicating a size of a resource block for frequency hopping; and

a quantity of one-direction frequency hops, indicating a quantity of frequency hops in a one-direction frequency hopping process performed in an ascending frequency order or a descending frequency order.

12. The method according to any one of claims 1 to 11, wherein the frequency hopping manner comprises: transmitting the random access preamble sequence based on a combination of the frequency hopping manner and the non-frequency hopping manner.

13. The method according to claim 12, wherein the frequency hopping information comprises information about a ratio between the frequency hopping resources and a non-frequency hopping resource.

14. The method according to claim 12, wherein the frequency hopping information comprises time domain position information of the frequency hopping resources.

15. A communication method, comprising:

determining, by a network device, frequency hopping information associated with a random access preamble sequence, wherein the frequency hopping information indicates a terminal device to select a frequency hopping manner or a non-frequency hopping manner, to transmit the random access preamble sequence to the network device; and

transmitting, by the network device, the frequency hopping information to the terminal device.

16. The method according to claim 15, wherein the frequency hopping information comprises a frequency hopping gain.

17. The method according to claim 15, wherein the frequency hopping information comprises frequency hopping pattern information, and the frequency hopping pattern information indicates a distribution pattern of frequency hopping resources for transmitting the random access preamble sequence.

18. The method according to claim 17, wherein the distribution pattern comprises: frequency hopping arrangement of the frequency hopping resources along a time increasing direction in an ascending frequency order or a descending frequency order.

19. The method according to claim 18, wherein the frequency hopping pattern information comprises at least one of the following:

a frequency offset, indicating an offset in frequency domain between adjacent resource blocks in a same frequency hopping period;

a resource block granularity, indicating a size of a resource block for frequency hopping; and

a quantity of frequency hops per period, indicating a quantity of frequency hopping resource blocks measured at the resource block granularity in a same frequency hopping period.

20. The method according to claim 17, wherein the distribution pattern comprises: frequency hopping arrangement, of the frequency hopping resources along a time increasing direction, alternating between an ascending frequency order and a descending frequency order.

21. The method according to claim 20, wherein the frequency hopping pattern indication comprises at least one of the following:

a frequency offset, indicating an offset in frequency domain between adjacent resource blocks in a same frequency hopping period;

a resource block granularity, indicating a size of a resource block for frequency hopping; and

a quantity of one-direction frequency hops, indicating a quantity of frequency hops in a one-direction frequency hopping process performed in an ascending frequency order or a descending frequency order.

22. The method according to any one of claims 15 to 21, wherein the frequency hopping manner comprises: transmitting the random access preamble sequence based on a combination of the frequency hopping manner and the non-frequency hopping manner.

23. The method according to claim 22, wherein the frequency hopping information comprises information about a ratio between the frequency hopping resources and a non-frequency hopping resource.

24. The method according to claim 22, wherein the frequency hopping information comprises time domain position information of the frequency hopping resources.

25. A terminal device, comprising a processor and a memory that stores instructions, wherein when the instructions are executed by the processor, the terminal device is enabled to perform the method according to any one of claims 1 to 14.

26. A network device, comprising a processor and a memory that stores instructions, wherein when the instructions are executed by the processor, the network device is enabled to perform the method according to any one of claims 15 to 24.

27. A computer-readable storage medium, wherein the computer-readable storage medium stores instructions, and when the instructions are executed by an electronic device, the electronic device is enabled to perform the method according to any one of claims 1 to 14 or any one of claims 15 to 24.

28. A computer program product, wherein the computer program product comprises instructions, and when the instructions are executed by an electronic device, the electronic device is enabled to perform the method according to any one of claims 1 to 14 or any one of claims 15 to 24.

100

101

117 Random access response

115 Random access
preamble sequence

113 Random access response

105

111 Random access
preamble sequence

103

FIG. 1

200

Terminal device — 103

Network device — 101

208 · | 210 Random access preamble sequence | 212

222 · | 220 Random access response | 218

228 · | 230 Scheduled uplink transmission | 232

242 · | 240 Contention resolution | 238

FIG. 2A

250

| Cyclic prefix | Symbol 1 | Symbol 2 | Symbol 3 | Symbol 4 | Symbol 5 |

FIG. 2B

260

Frequency

Symbol group 2

Symbol group 3

$f_{FH2}$=22.5 kHz

Symbol group 1

Symbol group 0

$f_{FH1}$=3.75 kHz

Time

FIG. 2C

270

Frequency

275

280

285

290

Time

FIG. 2D

300 ⌐

| Terminal device | ⌐ 103 | | Network device | ⌐ 101 |

⌐ 305

Determine
frequency hopping
information

312 ⌐         310 Frequency hopping information          ⌐ 308

⌐ 320

Select a frequency
hopping manner or a
non-frequency hopping
manner based on the
frequency hopping
information

328 ⌐         330 Random access preamble sequence          ⌐ 332

FIG. 3A

340

Frequency

342    344    346    348    350    352

Time

FIG. 3B

370

Frequency

372    374    376    378    380    382    384

Time

FIG. 3C

FIG. 4A

FIG. 4B

500

Receive, from a network device, frequency hopping information associated with a random access preamble sequence — 510

Select a frequency hopping manner or a non-frequency hopping manner based on the frequency hopping information, to transmit the random access preamble sequence to the network device — 520

FIG. 5

600

Determine frequency hopping information associated with a random access preamble sequence, where the frequency hopping information indicates a terminal device to select a frequency hopping manner or a non-frequency hopping manner, to transmit the random access preamble sequence to the network device — 610

Transmit the frequency hopping information to the terminal device — 620

FIG. 6

Communication apparatus 700

Processing module 702

Transceiver module 701

FIG. 7

Communication apparatus 800

Processor 810

Interface circuit 820

Memory 830

FIG. 8

911

910

Antenna

912

Radio frequency unit

BBU

RRU

Board

921

922

Memory

Processor

920

FIG. 9

## INTERNATIONAL SEARCH REPORT

| International application No. |
|---|
| **PCT/CN2023/122199** |

### A. CLASSIFICATION OF SUBJECT MATTER

H04B1/713(2011.01)i

According to International Patent Classification (IPC) or to both national classification and IPC

### B. FIELDS SEARCHED

Minimum documentation searched (classification system followed by classification symbols)

IPC: H04B, H04W, H04L

Documentation searched other than minimum documentation to the extent that such documents are included in the fields searched

Electronic data base consulted during the international search (name of data base and, where practicable, search terms used)

CNTXT; ENTXTC; DWPI; CNKI; 3GPP: 消息1, 第一消息, 前导, 跳频, 重复, 次数, 个数, 数目, 数量, 多少, msg1, preamble, frequency hopping, repeat+, repetition?, number, quantity

### C. DOCUMENTS CONSIDERED TO BE RELEVANT

| Category* | Citation of document, with indication, where appropriate, of the relevant passages | Relevant to claim No. |
|---|---|---|
| X | CN 109600211 A (ZTE CORP.) 09 April 2019 (2019-04-09) description, paragraphs 140-334 | 1, 2, 7-11, 16-21, 25-28 |
| A | CN 113630869 A (HUAWEI TECHNOLOGIES CO., LTD.) 09 November 2021 (2021-11-09) entire document | 1-28 |
| A | CN 108809557 A (HUAWEI TECHNOLOGIES CO., LTD.) 13 November 2018 (2018-11-13) entire document | 1-28 |
| A | US 2022393717 A1 (ZTE CORP.) 08 December 2022 (2022-12-08) entire document | 1-28 |
| A | KR 20210153837 A (INNOVATIVE TECHNOLOGY LAB CO., LTD.) 20 December 2021 (2021-12-20) entire document | 1-28 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 November 2023** | **02 January 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/122199** |

| Patent document cited in search report | | | Publication date (day/month/year) | Patent family member(s) | | | Publication date (day/month/year) |
|---|---|---|---|---|---|---|---|
| CN | 109600211 | A | 09 April 2019 | None | | | |
| CN | 113630869 | A | 09 November 2021 | None | | | |
| CN | 108809557 | A | 13 November 2018 | None | | | |
| US | 2022393717 | A1 | 08 December 2022 | BR | 112022015157 | A2 | 17 January 2023 |
| | | | | EP | 4085712 | A1 | 09 November 2022 |
| | | | | EP | 4085712 | A4 | 14 December 2022 |
| | | | | WO | 2022006765 | A1 | 13 January 2022 |
| KR | 20210153837 | A | 20 December 2021 | None | | | |

Form PCT/ISA/210 (patent family annex) (July 2022)